# EUROPEAN PATENT APPLICATION

(11) **EP 4 840 571 A1**
(43) Date of publication of application: **18.11.2026**
(21) Application number: 24925819.5
(22) Date of filing: 05.12.2024
(51) Int. Cl.: B23K 13/00, B21C 37/08, C21D 9/50, C22C 38/00, C22C 38/58

(54) **ELECTRIC RESISTANCE WELDED STEEL PIPE, LINE PIPE, AND METHOD OF MANUFACTURING ELECTRIC RESISTANCE WELDED STEEL PIPE**

(30) Priority: 20.02.2024 JP 2024023507
(71) Applicant: JFE Steel Corporation, Tokyo 100-0011 (JP)
(72) Inventor: MATSUMOTO, Akihide, Tokyo 100-0011 (JP); IWATA, Naomichi, Tokyo 100-0011 (JP); EGUCHI, Kenichiro, Tokyo 100-0011 (JP)
(74) Representative: Haseltine Lake Kempner LLP
(86) International application number: PCT/JP2024/042975
(87) International publication number: WO 2025/177667

(57) **Abstract**

The present invention is directed to providing an electric resistance welded steel pipe and a line pipe that have excellent bending resistance and to providing a method for manufacturing the electric resistance welded steel pipe.

An electric resistance welded steel pipe including a base metal material and an electric resistance weld, wherein, in a flattening test in which a flattening test specimen cut from the electric resistance welded steel pipe is compressed between two flat plates, a ratio of a total length of cracks having a length in a pipe axis direction of 0.50 mm or greater as observed on an outer surface of the flattening test specimen to an entire length of the flattening test specimen in the pipe axis direction is 0.050 or less, and a maximum crack length of the cracks in the pipe axis direction is 2.0 mm or less, at a time a flattening value h/D reaches 0.25, where h is a distance (mm) between the flat plates in the flattening test, D is an outside diameter (mm) of the electric resistance welded steel pipe, and the flattening value h/D is 1 at a start of the flattening test.

## Description

### Technical Field

The present invention relates to an electric resistance welded steel pipe suitable for use as a line pipe and also relates to a line pipe and a method for manufacturing the electric resistance welded steel pipe.

### Background Art

Pipelines for transporting oil, natural gas, and the like can experience bending deformation in the event of an earthquake or the like. To prevent leakage of internal fluids from occurring in such cases, it is necessary to design line pipes with an internal pressure, dimensions, and a material that are suitable for the expected amount of deformation.

Conventionally, line pipes for the applications mentioned above have been UOE steel pipes; in recent years, however, electric resistance welded steel pipes, which are less expensive, have been used in some cases. Unfortunately, when the electric resistance weld of the electric resistance welded steel pipe has a defect, it is highly likely that cracking occurs with the defect serving as an initiation site and causes leakage of internal fluids. Accordingly, there has been a need for an electric resistance welded steel pipe having an electric resistance weld with few defects.

Common defects in the electric resistance weld include inclusions, such as oxides, that are formed during electric resistance welding.

Patent Literature 1 and 2 propose electric resistance welded steel pipes having improved toughness and HIC resistance that are achieved by controlling a composition and a number density of inclusions of the electric resistance weld.

### Citation List

### Patent Literature

PTL 1: Japanese Patent No. 5534111
PTL 2: Japanese Unexamined Patent Application Publication No. 2022-168987

### Summary of Invention

### Technical Problem

Unfortunately, in the electric resistance welded steel pipes described in Patent Literature 1 and 2, cracking in the electric resistance weld associated with bending deformation is not sufficiently inhibited.

The present invention has been made in view of the above-described circumstances. Accordingly, the present invention is directed to providing an electric resistance welded steel pipe and a line pipe that have excellent bending resistance and to providing a method for manufacturing the electric resistance welded steel pipe.

In the present invention, the expression "having excellent bending resistance" refers to cases where, even when a cross section parallel to a pipe circumference is flattened, the electric resistance weld does not break; specifically, as described below, in a flattening test, a ratio of a total length of cracks having a length in a pipe axis direction of 0.50 mm or greater as observed on an outer surface of the flattening test specimen to an entire length of the flattening test specimen in the pipe axis direction is 0.050 or less, and a maximum crack length of the cracks in the pipe axis direction is 2.0 mm or less, at the time a flattening value h/D reaches 0.25, where h is a distance (mm) between flat plates in the flattening test, and D is an outside diameter (mm) of the electric resistance welded steel pipe.

### Solution to Problem

The present inventors diligently conducted studies and consequently found the following: when a steel pipe undergoes bending deformation, a circumferential cross section of the pipe is flattened, and, in a portion thereof with a high curvature, a tensile stress in a pipe circumferential direction is generated on an outer surface of the pipe; therefore, when the electric resistance weld is located in that portion, cracking may occur in the electric resistance weld.

Another finding made is that homogenizing a steel microstructure of the electric resistance weld can inhibit the concentration of deformation in the surroundings of inclusions and at interfaces between a hard microstructure and a soft microstructure, thereby inhibiting cracking in the electric resistance weld.

The present invention was completed based on the above-described findings, and a summary of the present invention is as follows.
[1] An electric resistance welded steel pipe including a base metal material and an electric resistance weld, wherein
   in a flattening test in which a flattening test specimen cut from the electric resistance welded steel pipe is compressed between two flat plates, a ratio of a total length of cracks having a length in a pipe axis direction of 0.50 mm or greater as observed on an outer surface of the flattening test specimen to an entire length of the flattening test specimen in the pipe axis direction is 0.050 or less, and a maximum crack length of the cracks in the pipe axis direction is 2.0 mm or less, at a time a flattening value h/D reaches 0.25, where
   h is a distance (mm) between the flat plates in the flattening test,
   D is an outside diameter (mm) of the electric resistance welded steel pipe, and
   the flattening value h/D is 1 at a start of the flattening test.
[2] The electric resistance welded steel pipe according to [1], wherein the base metal material has a chemical composition containing, in mass%:
   C: 0.020% or greater and 0.200% or less,
   Si: 0.40% or less,
   Mn: 0.50% or greater and 2.50% or less,
   P: 0.050% or less,
   S: 0.0200% or less,
   Al: 0.005% or greater and 0.100% or less, and
   N: 0.0100% or less;
   the chemical composition optionally further containing, in mass%, one or more selected from
   Nb: 0.080% or less,
   V: 0.080% or less,
   Ti: 0.080% or less,
   Cu: 0.50% or less,
   Ni: 0.50% or less,
   Cr: 0.50% or less,
   Mo: 0.50% or less,
   Ca: 0.0050% or less,
   B: 0.0050% or less, and
   Sn: 0.100% or less,
   with the balance of the chemical composition being Fe and unavoidable impurities.
[3] The electric resistance welded steel pipe according to [1] or [2], wherein a steel microstructure at a wall-thickness-wise middle of the electric resistance weld has an average KAM value of 2.0° or greater and 4.0° or less and a standard deviation of a KAM value distribution of 1.5° or less, where KAM stands for Kernel Average Misorientation, and the average KAM value is an average of KAM values.
[4] A line pipe including the electric resistance welded steel pipe described in any one of [1] to [3].
[5] A method for manufacturing the electric resistance welded steel pipe described in any one of [1] to [3], the method including an electric resistance welding process that uses a hot rolled steel sheet serving as a material of the electric resistance welded steel pipe and in which a widthwise end and another widthwise end of the hot rolled steel sheet are abutted against each other and electric-resistance-welded, wherein
   an angle formed by opposing abutting surfaces is 0° or greater and 15° or less,
   a cross-sectional area (mm²) of a portion of expelled molten steel present on an outer surface of the electric resistance welded pipe is greater than or equal to 0.5 times and less than or equal to 2.0 times a thickness (mm) of the hot rolled steel sheet, and
   an amount (mm) of upset is 20% or greater and 100% or less of the thickness (mm).
[6] The method for manufacturing the electric resistance welded steel pipe according to [5], further including a heat treatment process that is performed after the electric resistance welding process, the heat treatment process being a process in which
   heating is performed at a heating temperature of 900°C or greater and 1150°C or less, the heating temperature being a temperature at a wall-thickness-wise middle of the electric resistance weld, and
   cooling is performed under conditions in which an average cooling rate is 2°C/s or greater and 10°C/s or less over a range of 950 to 850°C, the average cooling rate is 12°C/s or greater over a range of 800 to 650°C, and the average cooling rate is 15°C/s or less over a range of 600 to 200°C, the average cooling rate being an average cooling rate at the wall-thickness-wise middle of the electric resistance weld.
[7] The method for manufacturing the electric resistance welded steel pipe according to [6], further including a tempering process that is performed after the heat treatment process and uses a holding temperature of 500°C or greater and 700°C or less, the holding temperature being a temperature at the wall-thickness-wise middle of the electric resistance weld.

### Advantageous Effects of Invention

The present invention can provide an electric resistance welded steel pipe and a line pipe that have excellent bending resistance and provide a method for manufacturing the electric resistance welded steel pipe. Brief Description of Drawings

[Fig. 1] Fig. 1 is a diagram illustrating how a flattening test is performed on an electric resistance welded steel pipe, as observed from a side view.
[Fig. 2] Fig. 2 is a diagram illustrating an electric resistance welding process in which a widthwise end and another widthwise end of a hot rolled steel sheet are abutted against each other and electric-resistance-welded.
[Fig. 3] Fig. 3 is a diagram illustrating a gap between fin pass rolls and an angle between abutting surfaces, regarding electric resistance welding.
[Fig. 4] Fig. 4 is a schematic diagram illustrating a method for calculating a cross-sectional area of a portion of expelled molten steel on an outer surface.
[Fig. 5] Fig. 5 is a schematic diagram of a cross section parallel to a pipe circumferential direction (cross section perpendicular to a pipe axis direction), the cross section containing an electric resistance weld. Description of Embodiments

An electric resistance welded steel pipe of the present invention will be described below.

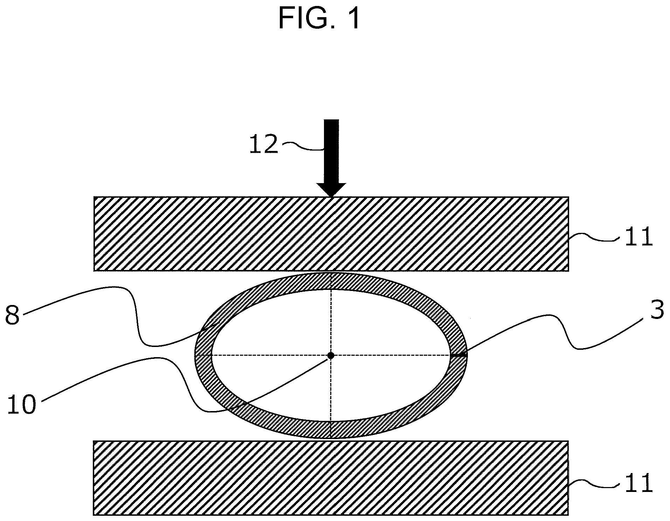

Fig. 1 is a diagram illustrating how a flattening test is performed on the electric resistance welded steel pipe, as observed from a side view. In the flattening test, a flattening test specimen (test specimen) 8 is compressed between two flat plates. In the test, the test specimen 8 is placed such that, regarding an electric resistance weld 3 of the test specimen 8, a line connecting a center 10 of the test specimen 8 to the electric resistance weld is perpendicular to a compression direction 12. The electric resistance welded steel pipe of the present invention includes a base metal material and an electric resistance weld, and, in the flattening test in which the flattening test specimen 8, cut from the electric resistance welded steel pipe, is compressed between two flat plates 11, a ratio of a total length of cracks having a length in a pipe axis direction of 0.50 mm or greater as observed on an outer surface of the flattening test specimen to an entire length of the flattening test specimen 8 in the pipe axis direction is 0.050 or less, and a maximum crack length of the cracks in the pipe axis direction is 2.0 mm or less, at the time a flattening value h/D reaches 0.25. The flattening value h/D is 1 at the start of the flattening test. The "outer surface of the flattening test specimen" corresponds to an outer surface of the electric resistance welded steel pipe.

In this specification, "%" used to express a steel composition is "mass%" unless otherwise specified.

Ratio of Total Length of Cracks Having Length in Pipe Axis Direction of 0.50 mm or Greater as Observed on Outer Surface of Flattening Test Specimen to Entire Length of Flattening Test Specimen in Pipe Axis Direction: 0.050 or less

When a crack is formed in a steel pipe when it undergoes bending deformation, stress is concentrated on an edge of the crack, and, consequently, the crack propagates in a wall thickness direction and causes fracture, and thus, loading resistance is reduced. When the ratio of the total length at the above-mentioned time is greater than 0.050, a proportion of portions of the electric resistance weld that undergo fracture is large, that is, sufficient bending resistance is not achieved. Accordingly, the ratio of the total length of cracks having a length in a pipe axis direction of 0.50 mm or greater as observed on the outer surface of the flattening test specimen to the entire length of the flattening test specimen in the pipe axis direction is to be 0.050 or less. The lower the ratio of the total length of cracks at the above-mentioned time, the better. The ratio is preferably 0.040 or less, more preferably 0.035 or less, even more preferably 0.030 or less, most preferably 0.020 or less, and even most preferably 0. The ratio of the total length of cracks to the entire length of the test specimen is to be the maximum value among the values obtained for each of the test specimens. The cracks of interest are cracks being visually observable and having a length of 0.50 mm or greater. Furthermore, the cracks of interest are cracks observed in the electric resistance weld. Furthermore, the cracks having a length in a pipe axis direction of 0.50 mm or greater as observed on the outer surface of the flattening test specimen include not only cracks existing in parallel with the pipe axis direction but also cracks having a cracking length direction that has an angle with respect to the pipe axis direction, and in the case of such cracks having an angle, a component in the pipe axis direction of the length is determined by decomposing the length and used as the length of the crack for evaluation. The upper limit of the cracks is not particularly limited and may be 5.00 mm or less.

### Maximum Crack Length: 2.0 mm or less

Regarding regions in which cracks having large lengths are formed in the pipe axis direction, the cracks, in many cases, are deep cracks extending in the wall thickness direction, and, therefore, such regions are likely to experience fracture at an earlier stage. When the maximum crack length at the above-mentioned time is greater than 2.0 mm, sufficient bending resistance is not achieved. The lower the maximum crack length at the above-mentioned time, the better. The maximum crack length is preferably 1.5 mm or less, more preferably 1.0 mm or less, and most preferably 0 mm. The maximum crack length is to be the maximum value among the values obtained for each of the test specimens.

The flattening test is to be performed in accordance with the specifications of JIS G 3445 (2021). The test specimen is a tubular test specimen having a length in the pipe axis direction of 100 mm. The number of test specimens that are tested is five. A portion of the electric resistance weld 3 exposed on the outer surface of the pipe (an outer surface side of the flattening test specimen) is polished to a metallic luster. A compression speed of 10 mm/min is employed. At the time the flattening value h/D reaches 0.25, the compression is stopped, and at that time, the length of each of the cracks is measured. The flattening value is determined by the expression h/D, where h is a distance (mm) between the flat plates in the flattening test, and D is an outside diameter (mm) of the electric resistance welded steel pipe.

Preferably, the base metal material of the electric resistance welded steel pipe of the present invention has a chemical composition containing, in mass%,
C: 0.020% or greater and 0.200% or less,
Si: 0.40% or less,
Mn: 0.50% or greater and 2.50% or less,
P: 0.050% or less,
S: 0.0200% or less,
Al: 0.005% or greater and 0.100% or less, and
N: 0.0100% or less;
the chemical composition optionally further containing, in mass%, one or more selected from
Nb: 0.080% or less,
V: 0.080% or less,
Ti: 0.080% or less,
Cu: 0.50% or less,
Ni: 0.50% or less,
Cr: 0.50% or less,
Mo: 0.50% or less,
Ca: 0.0050% or less,
B: 0.0050% or less, and
Sn: 0.100% or less,
with the balance of the chemical composition being Fe and unavoidable impurities.

In this specification, "%" used to express the steel composition is "mass%" unless otherwise specified.

### C: 0.020% or greater and 0.200% or less

C is an element that increases the strength of steel through solid solution strengthening. In addition, C is an element that lowers a transformation start temperature, thereby refining grains and, consequently, increasing the strength of steel. When a C content is low, a soft microstructure is likely to be formed in the electric resistance weld, and, therefore, the electric resistance weld consequently has a low average KAM (Kernel Average Misorientation) value. In order for the effects to be achieved, it is preferable that C be present in an amount of 0.020% or greater. The C content is more preferably 0.025% or greater and even more preferably 0.030% or greater. The C content is most preferably 0.034% or greater. However, when an excessive amount of C is included, ductility and toughness are reduced, which results in reduced bending resistance. In addition, a hard microstructure is likely to be formed in the electric resistance weld, and, therefore, the electric resistance weld consequently has a high average KAM value and a large standard deviation of a KAM value distribution. Accordingly, the C content is preferably 0.200% or less. The C content is more preferably 0.180% or less. The C content is even more preferably 0.170% or less. The C content is most preferably 0.166% or less.

### Si: 0.40% or less

Si is an element that increases the strength of steel through solid solution strengthening. In order for this effect to be achieved, it is preferable that Si be present in an amount of 0.02% or greater. A Si content is more preferably 0.05% or greater and even more preferably 0.08% or greater. The Si content is most preferably 0.10% or greater. However, when an excessive amount of Si is included, ductility and toughness are reduced, which results in reduced bending resistance. In addition, large amounts of Si-based oxides are formed in the electric resistance weld, which further reduces the ductility and the toughness of the electric resistance weld. Accordingly, the Si content is preferably 0.40% or less. The Si content is more preferably 0.35% or less. The Si content is even more preferably 0.30% or less. The Si content is most preferably 0.26% or less.

### Mn: 0.50% or greater and 2.50% or less

Mn is an element that increases the strength of steel through solid solution strengthening. In addition, Mn is an element that lowers a transformation start temperature, thereby refining grains and, consequently, increasing the strength of steel. In order for these effects to be achieved, it is preferable that Mn be present in an amount of 0.50% or greater. A Mn content is more preferably 0.60% or greater and even more preferably 0.70% or greater. The Mn content is most preferably 0.80% or greater. When the Mn content is low, a soft microstructure is likely to be formed in the electric resistance weld, and, therefore, the electric resistance weld consequently has a low average KAM value. However, when an excessive amount of Mn is included, ductility and toughness are reduced, which results in reduced bending resistance. In addition, a hard microstructure is likely to be formed in the electric resistance weld, and, therefore, the electric resistance weld consequently has a high average KAM value and a large standard deviation of a KAM value distribution. In addition, large amounts of Mn-based oxides are formed in the electric resistance weld, which further reduces the ductility and the toughness of the electric resistance weld. Accordingly, the Mn content is preferably 2.50% or less. The Mn content is more preferably 2.30% or less. The Mn content is even more preferably 2.00% or less. The Mn content is most preferably 1.80% or less.

### P: 0.050% or less

P reduces toughness by segregating at grain boundaries, and, therefore, it is preferable to reduce an amount of P, which is an unavoidable impurity, as much as possible. Preferably, a P content is within a range of 0.050% or less. The P content is more preferably 0.040% or less and even more preferably 0.030% or less. The P content is most preferably 0.020% or less. While the lower limit of the P content is not particularly limited, it is preferable that the P content be 0.001% or greater because excessive reduction results in an increase in smelting cost. The P content is more preferably 0.002% or greater and even more preferably 0.003% or greater.

### S: 0.0200% or less

S is usually present as MnS in steel. MnS is stretched and thinned in a hot rolling process and, consequently, has an adverse effect on ductility and toughness. Accordingly, in the present invention, it is preferable to reduce an amount of S as much as possible. Preferably, a S content is 0.0200% or less. The S content is more preferably 0.0100% or less and even more preferably 0.0050% or less. The S content is most preferably 0.0040% or less. While the lower limit of the S content is not particularly limited, it is preferable that the S content be 0.0001% or greater because excessive reduction results in an increase in smelting cost. The S content is more preferably 0.0002% or greater and even more preferably 0.0003% or greater.

### Al: 0.005% or greater and 0.100% or less

Al is an element that acts as a strong deoxidizing agent. In order for this effect to be achieved, it is preferable that Al be present in an amount of 0.005% or greater. An Al content is more preferably 0.010% or greater and even more preferably 0.015% or greater. The Al content is most preferably 0.020% or greater. However, when an excessive amount of Al is included, weldability is degraded, and a number of alumina-based inclusions increases, which degrades surface properties. Accordingly, the Al content is preferably 0.100% or less. The Al content is more preferably 0.080% or less. The Al content is even more preferably 0.070% or less. The Al content is most preferably 0.060% or less.

### N: 0.0100% or less

N is an unavoidable impurity and is an element that has an effect of reducing ductility and toughness by strongly pinning the movement of dislocations. In the present invention, it is desirable to reduce an amount of N, which is an impurity, as much as possible; however, an N content of up to 0.0100% is permissible. Accordingly, the N content is preferably 0.0100% or less. The N content is more preferably 0.0080% or less. The N content is even more preferably 0.0060% or less. The N content is most preferably 0.0050% or less. While the lower limit is not particularly limited, it is preferable that the N content be 0.0010% or greater. The N content is more preferably 0.0015% or greater.

The above-described elements are basic components in the present invention, and additionally, other elements may be optionally included, which will be described below.

### Nb: 0.080% or less

Nb is an element that forms fine carbides and nitrides in steel, thereby contributing to improving the strength of the steel. Nb is also an element that inhibits the coarsening of microstructures during hot rolling, thereby contributing to refining microstructures, and, consequently, increases the strength of the steel. In order for these effects to be achieved, it is preferable that Nb be present in an amount of 0.002% or greater. A Nb content is more preferably 0.005% or greater and even more preferably 0.008% or greater. The Nb content is most preferably 0.010% or greater. However, when an excessive amount of Nb is included, ductility and toughness are reduced, which results in reduced bending resistance. Accordingly, in the case where Nb is included, the Nb content is to be 0.080% or less. The Nb content is preferably 0.075% or less. The Nb content is more preferably 0.070% or less. The Nb content is even more preferably 0.065% or less and most preferably 0.060% or less.

### V: 0.080% or less

V is an element that forms fine carbides and nitrides in steel, thereby contributing to improving the strength of the steel. In order for this effect to be achieved, it is preferable that V be present in an amount of 0.002% or greater. A V content is more preferably 0.005% or greater and even more preferably 0.008% or greater. The V content is most preferably 0.010% or greater. However, when an excessive amount of V is included, ductility and toughness are reduced, which results in reduced bending resistance. Accordingly, in the case where V is included, the V content is to be 0.080% or less. The V content is preferably 0.075% or less. The V content is more preferably 0.070% or less. The V content is even more preferably 0.065% or less and most preferably 0.060% or less.

### Ti: 0.080% or less

Ti is an element that forms fine carbides and nitrides in steel, thereby contributing to improving the strength of the steel. Ti is also an element that has a high affinity for N and, therefore, contributes to reducing an amount of N dissolved in steel. In order for these effects to be achieved, it is preferable that Ti be present in an amount of 0.002% or greater. A Ti content is more preferably 0.005% or greater and even more preferably 0.008% or greater. The Ti content is most preferably 0.010% or greater. However, when an excessive amount of Ti is included, ductility and toughness are reduced, which results in reduced bending resistance. Accordingly, in the case where Ti is included, the Ti content is to be 0.080% or less. The Ti content is preferably 0.070% or less. The Ti content is more preferably 0.060% or less. The Ti content is even more preferably 0.050% or less and most preferably 0.040% or less.

### Cu: 0.50% or less

Cu is an element that increases the strength of steel through solid solution strengthening. In addition, Cu is an element that lowers a transformation start temperature, thereby contributing to refining microstructures, and, consequently, increases the strength of the steel. In order for these effects to be achieved, it is preferable that a Cu content be 0.01% or greater. The Cu content is more preferably 0.02% or greater and even more preferably 0.05% or greater. The Cu content is most preferably 0.10% or greater. When the Cu content is low, a soft microstructure is likely to be formed in the electric resistance weld, and, therefore, the electric resistance weld consequently has a low average KAM value. However, when an excessive amount of Cu is included, ductility and toughness are reduced, which results in reduced bending resistance. In addition, a hard microstructure is likely to be formed in the electric resistance weld, and, therefore, the electric resistance weld consequently has a high average KAM value and a large standard deviation of a KAM value distribution. Accordingly, in the case where Cu is included, the Cu content is to be 0.50% or less. The Cu content is preferably 0.45% or less. The Cu content is more preferably 0.40% or less. The Cu content is even more preferably 0.35% or less and most preferably 0.30% or less.

### Ni: 0.50% or less

Ni is an element that increases the strength of steel through solid solution strengthening. In addition, Ni is an element that lowers a transformation start temperature, thereby contributing to refining microstructures, and, consequently, increases the strength of the steel. In order for these effects to be achieved, it is preferable that a Ni content be 0.01% or greater. The Ni content is more preferably 0.02% or greater and even more preferably 0.05% or greater. The Ni content is most preferably 0.10% or greater. When the Ni content is low, a soft microstructure is likely to be formed in the electric resistance weld, and, therefore, the electric resistance weld consequently has a low average KAM value. However, when an excessive amount of Ni is included, ductility and toughness are reduced, which results in reduced bending resistance. In addition, a hard microstructure is likely to be formed in the electric resistance weld, and, therefore, the electric resistance weld consequently has a high average KAM value and a large standard deviation of a KAM value distribution. Accordingly, in the case where Ni is included, the Ni content is to be 0.50% or less. The Ni content is preferably 0.40 or less. The Ni content is more preferably 0.30% or less. The Ni content is even more preferably 0.25% or less and most preferably 0.20% or less.

### Cr: 0.50% or less

Cr is an element that lowers a transformation start temperature, thereby contributing to refining microstructures, and, consequently, increases the strength of steel. In order for this effect to be achieved, it is preferable that a Cr content be 0.01% or greater. The Cr content is more preferably 0.02% or greater and even more preferably 0.05% or greater. The Cr content is most preferably 0.08% or greater. When the Cr content is low, a soft microstructure is likely to be formed in the electric resistance weld, and, therefore, the electric resistance weld consequently has a low average KAM value. However, when an excessive amount of Cr is included, ductility and toughness are reduced, which results in reduced bending resistance. In addition, a hard microstructure is likely to be formed in the electric resistance weld, and, therefore, the electric resistance weld consequently has a high average KAM value and a large standard deviation of a KAM value distribution. In addition, large amounts of Cr-based oxides are formed in the electric resistance weld, which further reduces the ductility and the toughness of the electric resistance weld. Accordingly, in the case where Cr is included, the Cr content is to be 0.50% or less. The Cr content is preferably 0.45% or less. The Cr content is more preferably 0.40% or less. The Cr content is even more preferably 0.35% or less and most preferably 0.30% or less.

### Mo: 0.50% or less

Mo is an element that lowers a transformation start temperature, thereby contributing to refining microstructures, and, consequently, increases the strength of steel. In order for this effect to be achieved, it is preferable that a Mo content be 0.01% or greater. The Mo content is more preferably 0.02% or greater and even more preferably 0.05% or greater. The Mo content is most preferably 0.08% or greater. When the Mo content is low, a soft microstructure is likely to be formed in the electric resistance weld, and, therefore, the electric resistance weld consequently has a low average KAM value. However, when an excessive amount of Mo is included, ductility and toughness are reduced, which results in reduced bending resistance. In addition, a hard microstructure is likely to be formed in the electric resistance weld, and, therefore, the electric resistance weld consequently has a high average KAM value and a large standard deviation of a KAM value distribution. Accordingly, in the case where Mo is included, the Mo content is to be 0.50% or less. The Mo content is preferably 0.45% or less. The Mo content is more preferably 0.40% or less. The Mo content is even more preferably 0.35% or less and most preferably 0.30% or less.

### Ca: 0.0050% or less

Ca is an element that spheroidizes sulfides, such as MnS, which are stretched and thinned in a hot rolling process, and, therefore, is an element that contributes to improving the toughness of steel. In order for this effect to be achieved, it is preferable that Ca be present in an amount of 0.0002% or greater. A Ca content is more preferably 0.0005% or greater and even more preferably 0.0008% or greater. The Ca content is most preferably 0.0010% or greater. However, when an excessive amount of Ca is included, Ca oxide clusters are formed in steel, and, consequently, ductility and toughness are reduced, which results in reduced bending resistance. Accordingly, in the case where Ca is included, the Ca content is to be 0.0050% or less. The Ca content is preferably 0.0045% or less. The Ca content is more preferably 0.0040% or less. The Ca content is even more preferably 0.0035% or less and most preferably 0.0030% or less.

### B: 0.0050% or less

B is an element that lowers a transformation start temperature, thereby contributing to refining microstructures, and, consequently, increases the strength of steel. In order for this effect to be achieved, it is preferable that B be present in an amount of 0.0002% or greater. A B content is more preferably 0.0005% or greater and even more preferably 0.0008% or greater. The B content is most preferably 0.0010% or greater. When the B content is low, a soft microstructure is likely to be formed in the electric resistance weld, and, therefore, the electric resistance weld consequently has a low average KAM value. However, when an excessive amount of B is included, ductility and toughness are reduced, which results in reduced bending resistance. In addition, a hard microstructure is likely to be formed in the electric resistance weld, and, therefore, the electric resistance weld consequently has a high average KAM value and a large standard deviation of a KAM value distribution. Accordingly, in the case where B is included, the B content is to be 0.0050% or less. The B content is preferably 0.0040% or less. The B content is more preferably 0.0035% or less. The B content is even more preferably 0.0030% or less and most preferably 0.0025% or less.

### Sn: 0.100% or less

Sn is an element that inhibits decarburization caused by nitridation or oxidation of a surface of a steel, thereby inhibiting a decrease in strength. In order for this effect to be achieved, it is preferable that Sn be present in an amount of 0.001% or greater. A Sn content is more preferably 0.002% or greater and even more preferably 0.005% or greater. The Sn content is most preferably 0.008% or greater. However, when an excessive amount of Sn is included, the ductility and the toughness of the steel are reduced, which results in reduced bending resistance of the electric resistance weld. Accordingly, in the case where Sn is included, the Sn content is to be 0.100% or less. The Sn content is preferably 0.060% or less. The Sn content is more preferably 0.050% or less. The Sn content is even more preferably 0.040% or less and most preferably 0.030% or less.

The balance is Fe and unavoidable impurities. Examples of the unavoidable impurities in the balance include Mg, Zr, REMs, As, Sb, Bi, Co, Pb, Zn, O, Ta, W, Te, Hf, Ge, Sr, and Cs. It should be noted that these elements may be included in the following amounts, to the extent that does not impair the effects of the present invention: Mg, Zr, and REMs, each in an amount of 0.020% or less, As, Sb, Co, Ta, W, Te, Hf, Ge, Sr, and Cs, each in an amount of 0.10% or less, and Bi, Pb, Zn, and O, each in an amount of 0.005% or less. As used herein, "REMs" is a generic term for a total of 17 elements, which are Sc, Y, and lanthanoids. Among these 17 elements, one or more elements may be present as unavoidable impurities, and a "REM" content is the total content of the elements.

Preferably, a steel microstructure at a wall-thickness-wise middle of the electric resistance weld of the electric resistance welded steel pipe of the present invention has an average KAM value of 2.0° or greater and 4.0° or less and a standard deviation of a KAM value distribution of 1.5° or less.

### Average KAM Value: 2.0° or greater and 4.0° or less

The KAM (Kernel Average Misorientation) value represents a local misorientation. Higher KAM values indicate higher dislocation densities and higher hardness at the measurement point. When the average KAM value is less than 2.0°, a large amount of soft ferrite having a low dislocation density is present, which leads to stress concentration at interfaces with a neighboring hard phase, and these interfaces act as crack initiation sites, with a result of reduced bending resistance. Accordingly, it is preferable that the average KAM value be 2.0° or greater. The average KAM value is more preferably 2.2° or greater and even more preferably 2.3° or greater. The average KAM value is most preferably 2.4° or greater. On the other hand, when the average KAM value is greater than 4.0°, large amounts of martensite and a work-hardened microstructure, which are hard and have low ductility, are present, which results in reduced bending resistance. Accordingly, it is preferable that the average KAM value at the wall-thickness-wise middle of the electric resistance weld be 4.0° or less. In this case, the steel microstructure is one that primarily includes bainite, with the amount of work-hardened microstructure being reduced, which results in improved bending resistance. The average KAM value is more preferably 3.8° or less and even more preferably 3.7° or less. The average KAM value is most preferably 3.6° or less.

### Standard Deviation of KAM Value Distribution: 1.5° or less

When the KAM values have large variations, soft portions and hard portions coexist, and the difference in hardness between them is large. As a result, stress concentration occurs at interfaces between them, and these interfaces act as crack initiation sites, with a result of reduced bending resistance. Accordingly, it is preferable that the standard deviation of the KAM value distribution at the wall-thickness-wise middle of the electric resistance weld be 1.5° or less. The standard deviation of the KAM value distribution is more preferably 1.3° or less and even more preferably 1.2° or less. The standard deviation of the KAM value distribution is most preferably 1.1° or less. The smaller the standard deviation of the KAM value distribution, the better; however, excessive reduction results in increases in manufacturing cost and manufacturing loads, and, therefore, the standard deviation of the KAM value distribution is preferably 0.5° or greater. The standard deviation of the KAM value distribution is more preferably 0.6° or greater and even more preferably 0.7° or greater.

The average KAM value and the standard deviation of the KAM value distribution are measured with an SEM/EBSD method. A measurement area of 400 µm × 400 µm and a measurement step size of 0.1 µm are employed, and the measured values of five fields of view are averaged. A KAM value distribution image (KAM map) is acquired from the obtained EBSD data by using OIM Analysis (trademark), which is crystal orientation analysis software. The KAM value is determined in the following manner. For each of the measurement points (regular hexagonal pixels), the regular hexagonal pixel, which is a center, and surrounding pixels, namely, first, second, and third closest neighbors (a total of 37 pixels), are used to determine misorientations between each adjacent pair of pixels, and an average of the determined misorientations is taken as the KAM value of the central pixel. This operation is performed on all pixels in the field of view to obtain the KAM map. From the obtained distribution of KAM values, the average KAM value and the standard deviation of the KAM value distribution are determined according to equation (1) and equation (2), respectively.
[Math. 1] $\begin{matrix}Average KAM \\ value\end{matrix} = \frac{1}{n} {\sum }_{i = 1}^{n} \left(KAM value at ith measurement point\right)$ (1) n is the number of measurement points in the field of view.
[Math. 2] $\begin{matrix}Standard deviation of KAM \\ value distribution\end{matrix} = \sqrt{\frac{1}{n} {\sum }_{i = 1}^{n} {\left[\left(KAM value at ith measurement point\right)-\left(Average KAM value\right)\right]}^{2}}$ (2) n is the number of measurement points in the field of view.

Preferably, the electric resistance welded steel pipe of the present invention has a yield strength of the base metal material of 400 MPa or greater in order to withstand an internal pressure of fluids that are transported. The yield strength is more preferably 420 MPa or greater and even more preferably 440 MPa or greater. The yield strength is most preferably 450 MPa or greater. On the other hand, when the yield strength is increased, ductility decreases, which results in reduced bending resistance. Accordingly, the yield strength is preferably 900 MPa or less. The yield strength is more preferably 800 MPa or less and even more preferably 750 MPa or less. The yield strength is most preferably 700 MPa or less.

The yield strength can be measured in a tensile test. The tensile test is carried out in accordance with the specifications of JIS Z 2241 (2022). The yield strength (MPa) is a flow stress at a nominal strain of 0.5%. The test specimen to be used in the tensile test is a JIS No. 5 tensile test specimen. The test specimen is cut from a region of the base metal material such that a tensile direction (longitudinal direction of the test specimen) is parallel to the pipe axis direction. The region of the base metal material is a location 90 degrees (°) from the electric resistance weld in a circumferential direction. The location may be located 90 degrees clockwise or 90 degrees counterclockwise.

The electric resistance welded steel pipe described above can be used in line pipe applications.

Now, a method for manufacturing the electric resistance welded steel pipe, according to an embodiment of the present invention, will be described.

The electric resistance welded steel pipe of the present invention is manufactured, for example, as follows. A steel material having the above-described chemical composition is heated, hot rolled, and cooled. Subsequently, the resulting sheet is coiled to form a hot rolled steel sheet. Subsequently, the hot rolled steel sheet is subjected to cold roll forming to be formed into a cylindrical shape. A widthwise end and another widthwise end of the hot rolled steel sheet are abutted against each other and electric-resistance-welded.

In the description below regarding the manufacturing method, in the case where "°C" is used to express temperature, the temperature is a surface temperature of a hot rolled steel sheet unless otherwise specified. The surface temperature can be measured with a radiation thermometer or the like.

In the present invention, the steel material (steel slab) can be prepared by any steel making method, and any of the steel making methods known in the art, such as those using a converter, an electric arc furnace, a vacuum melting furnace, or the like, are suitable. Casting can also be carried out by any method. A casting method known in the art, such as a continuous casting method, is used to manufacture the slab having desired dimensions. An ingot making-blooming method may of course be used instead of a continuous casting method. The molten steel may be additionally subjected to secondary refining, such as ladle refining.

Next, the obtained steel material (steel slab) is heated, hot rolled, and cooled, and subsequently, the resulting sheet is coiled to form a hot rolled steel sheet.

Next, the hot rolled steel sheet is subjected to cold roll forming to be formed into a cylindrical open pipe, which is then electric-resistance-welded. Regarding a method for heating for the electric resistance welding, either Joule heating or induction heating may be used.

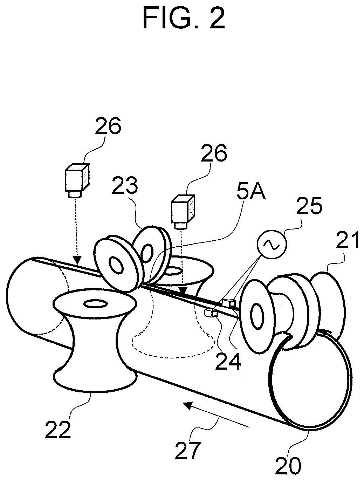

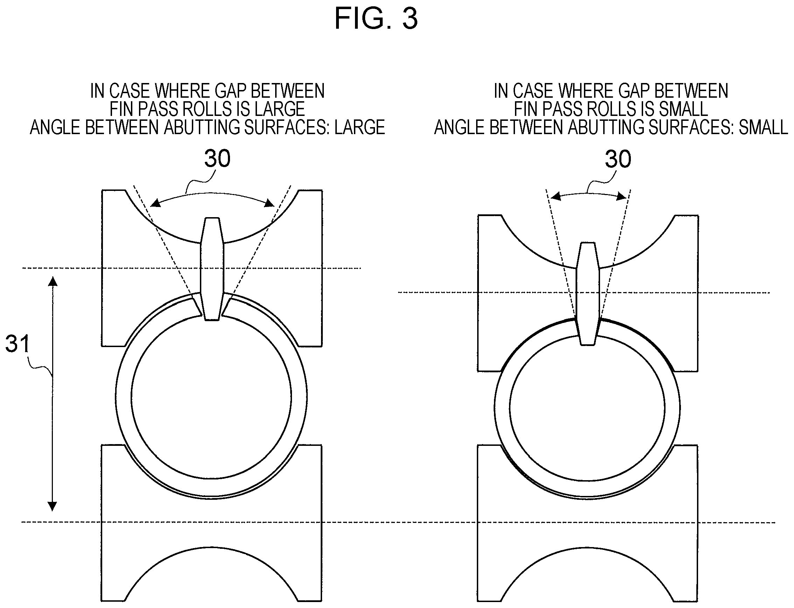

Fig. 2 is a schematic diagram illustrating an electric resistance welding process in which a widthwise end and another widthwise end of the hot rolled steel sheet are abutted against each other and electric-resistance-welded. Fig. 3 is a diagram illustrating a gap between fin pass rolls and an angle between abutting surfaces, regarding electric resistance welding. In Fig. 2, the open pipe is indicated by reference sign 20, an abutting point is indicated by reference sign 5A, a fin pass roll is indicated by reference sign 21, a squeeze roll is indicated by reference sign 22, a top roll is indicated by reference sign 23, a contact tip is indicated by reference sign 24, a highfrequency oscillator is indicated by reference sign 25, a laser profiler is indicated by reference sign 26, and a welding direction (pipe production direction) is indicated by reference sign 27. In Fig. 3, an angle formed by abutting surfaces is indicated by reference sign 30, and a gap between fin pass rolls is indicated by reference sign 31. For the electric resistance welding, an adjustment is to be made to the gap 31 between the fin pass rolls 21 and a gap between the squeeze rolls 22 such that the angle 30 formed by the opposing abutting surfaces is 0° or greater and 15° or less. The angle 30 formed by the opposing abutting surfaces is determined from a shape of an edge surface, which is obtained with a goniometer or a laser profiler 26 at a location spaced a distance three times greater than an outside diameter of the electric resistance welded steel pipe, from the abutting point 5A in a direction opposite to the pipe production direction 27. The smaller the gap 31 between the fin pass rolls 21, the stronger the contact of the widthwise ends (abutting surfaces) of the hot rolled steel sheet with a fin of the fin pass rolls 21, and, accordingly, the smaller the angle 30 formed by the opposing abutting surfaces. When the gap 31 between the fin pass rolls is excessively small, defects are likely to be formed between the rolls. In addition, a roll load becomes excessive, which increases an operation load. The smaller the gap between the squeeze rolls 22, the smaller the gap between the abutting surfaces, and, accordingly, the smaller the angle 30 formed by the abutting surfaces. When the gap between the squeeze rolls 22 is excessively small, an amount of upset becomes excessive. In addition, the roll load becomes excessive, which increases an operation load.

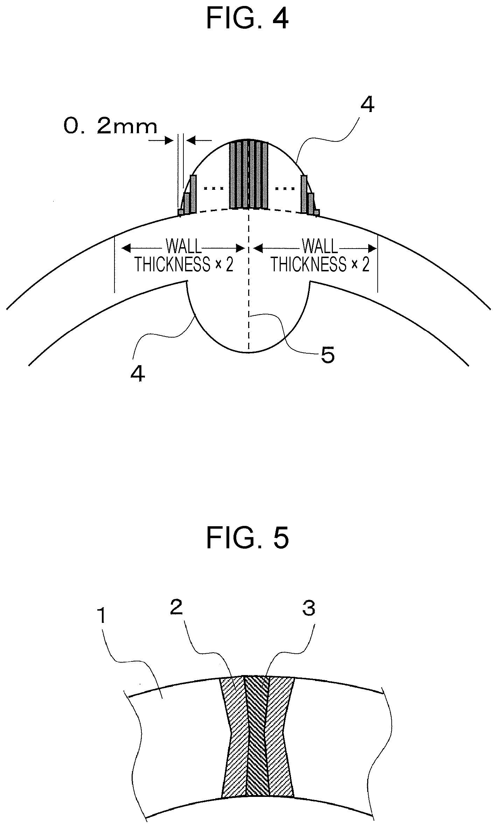

In addition to what has been described above, adjustments are to be made to a welding power, a pipe production speed, and the gap between the squeeze rolls 22 such that a cross-sectional area (mm²) of a portion of expelled molten steel present on the outer surface is greater than or equal to 0.5 times and less than or equal to 2.0 times a thickness (mm) of the hot rolled steel sheet. Fig. 4 is a schematic diagram illustrating a method for calculating the cross-sectional area of the expelled portion of the molten steel on the outer surface. Specifically, as illustrated in Fig. 4, in regions on both sides of the abutting portion 5 in the pipe circumferential direction, with the abutting portion 5 being a center and the regions each corresponding to twice the thickness, a height of a bead 4 is measured every 0.2 mm, and the heights are integrated to determine the cross-sectional area. When the welding power is low, an amount of the melt of the abutting surfaces (abutting surfaces before the joining) is reduced, which results in a small cross-sectional area of the expelled portion of the molten steel on the outer surface. When the welding power is high, the amount of the melt of the abutting surfaces is increased, which results in a large cross-sectional area of the expelled portion of the molten steel on the outer surface. When the pipe production speed is low, a heat input per unit of time is increased, which results in a large cross-sectional area of the expelled portion of the molten steel on the outer surface. When the pipe production speed is high, the heat input per unit of time is reduced, which results in a small cross-sectional area of the expelled portion of the molten steel on the outer surface. When the gap between the squeeze rolls 22 is small, the amount of upset is increased, which results in a large cross-sectional area of the expelled portion of the molten steel on the outer surface. When the gap between the squeeze rolls 22 is large, the amount of upset is reduced, which results in a small cross-sectional area of the expelled portion of the molten steel on the outer surface. The "pipe production speed" refers to an electric resistance welding speed.

Furthermore, an adjustment is to be made to the gap between the squeeze rolls 22 such that the amount (mm) of upset is 20% or greater and 100% or less of the thickness (mm). The amount (mm) of upset can be determined by (circumferential length (mm) of the open pipe immediately before electric resistance welding) - (circumferential length (mm) of the electric resistance welded steel pipe immediately after electric resistance welding).

When the angle 30 formed by the abutting surfaces is large, molten steel remains near the inner surface or the outer surface of the steel pipe, and, consequently, the molten steel is not sufficiently expelled. As a result, oxides that have been formed in the welded portion remain in the electric resistance weld and act as fracture initiation sites, and, consequently, the ductility and the toughness of the electric resistance weld are reduced, which results in reduced bending resistance. In addition, the difference between an amount of molten steel that is expelled onto the outer surface and the amount of molten steel that is expelled onto the inner surface increases, which makes it difficult to control the welding conditions only with the amount of molten steel that is expelled onto the outer surface. The smaller the angle 30 formed by the abutting surfaces, the better. Accordingly, the angle 30 formed by the abutting surfaces is to be 15° or less. The angle is preferably 13° or less and more preferably 10° or less. The angle is even more preferably 9° or less and most preferably 8° or less. Since the smaller the angle 30 formed by the abutting surfaces, the better, the angle 30 formed by the abutting surfaces is to be 0° or greater. The angle formed by the abutting surfaces is preferably 0.5° or greater and more preferably 1° or greater.

When the cross-sectional area of the expelled portion of the molten steel on the outer surface is large, the welded portion has been excessively melted, and, therefore, oxides that have been formed in the welded portion have not been sufficiently expelled during abutting and remain in the electric resistance weld 3; consequently, the ductility and the toughness of the electric resistance weld 3 are reduced, which results in reduced bending resistance. Accordingly, the cross-sectional area (mm²) of the molten steel is to be less than or equal to 2.0 times the thickness (mm) of an open pipe 20. As stated above, the thickness (mm) of the open pipe 20 is the thickness (mm) of the hot rolled steel sheet used as the material of the electric resistance welded steel pipe. Preferably, the cross-sectional area is less than or equal to 1.9 times the thickness. The cross-sectional area is more preferably less than or equal to 1.8 times the thickness, even more preferably less than or equal to 1.7 times the thickness, and most preferably less than or equal to 1.6 times the thickness. On the other hand, when the cross-sectional area of the expelled portion of the molten steel on the outer surface is small, upset has been performed excessively, and thus, a high degree of work hardening has occurred in the electric resistance weld 3; accordingly, the resulting average KAM value is high, and the resulting standard deviation of the KAM value distribution is high. In addition, since the electric-resistance-welded portion 3 has not been sufficiently melted, oxides that have been formed in the electric-resistance-welded portion 3 have not been sufficiently expelled and remain in the electric resistance weld 3. As a result, the ductility and the toughness of the electric resistance weld 3 are reduced, which results in reduced bending resistance. Accordingly, the cross-sectional area (mm²) of the molten steel is to be greater than or equal to 0.5 times the thickness (mm) of the hot rolled steel sheet. Preferably, the cross-sectional area is greater than or equal to 0.6 times the thickness. The cross-sectional area is more preferably greater than or equal to 0.7 times the thickness, even more preferably greater than or equal to 0.8 times the thickness, and most preferably greater than or equal to 0.9 times the thickness.

When the amount of upset is large, a high degree of work hardening occurs in the electric resistance weld 3; accordingly, the resulting average KAM value is high, and the resulting standard deviation of the KAM value distribution is high. In addition, a center segregation region is steeply formed and acts as a crack initiation site on the outer surface of the electric resistance welded steel pipe (outer surface of the pipe), and, therefore, the ductility and the toughness of the electric resistance weld 3 are reduced, which results in reduced bending resistance. Accordingly, the amount of upset is to be 100% or less of the thickness of the hot rolled steel sheet. Preferably, the amount of upset is 90% or less. The amount of upset is more preferably 85% or less, even more preferably 80% or less, and most preferably 75% or less. On the other hand, when the amount of upset is small, oxides that have been formed in the electric-resistance-welded portion 3 are not sufficiently expelled and remain in the electric resistance weld. Thus, the ductility and the toughness of the electric resistance weld 3 are reduced, which results in reduced bending resistance. Accordingly, the amount of upset is to be 20% or greater of the thickness. Preferably, the amount of upset is 30% or greater. The amount of upset is more preferably 35% or greater, even more preferably 40% or greater, and most preferably 45% or greater.

After the electric resistance welding process, heat treatment may be suitably performed to adjust a hardness of the electric resistance weld 3. In this case, the entirety of the electric resistance welded steel pipe may be heat-treated, or only the electric resistance weld 3 may be heat-treated. For the heat treatment, the method for heating may be induction heating; this method is a non-limiting example, and the method may be a method that uses a heating furnace.

Regarding the heat treatment, a heating temperature is preferably 900°C or greater and 1150°C or less. When the heating temperature is less than 900°C, austenite transformation partially occurs, and C is concentrated there and forms a hard microstructure, which results in a large standard deviation of the KAM value distribution. Accordingly, the heating temperature is preferably 900°C or greater. The heating temperature is more preferably 950°C or greater. The heating temperature is even more preferably 960°C or greater and most preferably 970°C or greater. On the other hand, when the heating temperature is greater than 1150°C, grains coarsen, which results in large variations in the KAM values of the grains and, thus, a large standard deviation of the KAM value distribution. Accordingly, the heating temperature for the heat treatment of the electric resistance weld 3 is preferably 1150°C or less. The heating temperature is more preferably 1100°C or less. The heating temperature is even more preferably 1090°C or less and most preferably 1080°C or less.

Regarding the cooling after the heating, an average cooling rate at the wall-thickness-wise middle is preferably as follows: 2°C/s or greater and 10°C/s or less over a range of 950 to 850°C; 12°C/s or greater over a range of 800 to 650°C; and 15°C/s or less over a range of 600 to 200°C.

When the average cooling rate over the range of 950 to 850°C is high, austenite becomes fine-grained, and ferrite is likely to be formed before the range of 800 to 650°C is reached. Consequently, the resulting average KAM value is low, and the resulting standard deviation of the KAM value distribution is large. Accordingly, the average cooling rate over the range of 950 to 850°C is preferably 10°C/s or less. The average cooling rate is more preferably 9°C/s or less. The average cooling rate is even more preferably 8°C/s or less and most preferably 7°C/s or less. On the other hand, when the average cooling rate over the range of 950 to 850°C is low, grains coarsen, which results in large variations in the KAM values of the grains and, thus, a large standard deviation of the KAM value distribution. Accordingly, the average cooling rate over the range of 950 to 850°C is preferably 2°C/s or greater. The average cooling rate is more preferably 3°C/s or greater. The average cooling rate is even more preferably 4°C/s or greater and most preferably 5°C/s or greater.

When the average cooling rate over the range of 800 to 650°C is low, ferrite is formed, which results in a low average KAM value and a large standard deviation of the KAM value distribution. Accordingly, the average cooling rate over the range of 800 to 650°C is preferably 12°C/s or greater. The average cooling rate is more preferably 15°C/s or greater. The average cooling rate is even more preferably 17°C/s or greater and most preferably 20°C/s or greater. The higher the average cooling rate over the range of 800 to 650°C, the more preferable. However, from the standpoint of equipment loads, it is preferable that the average cooling rate be 100°C/s or less. The average cooling rate over the range of 800 to 650°C is more preferably 50°C/s or less. The average cooling rate is even more preferably 45°C/s or less and most preferably 40°C/s or less.

When the average cooling rate over the range of 600 to 200°C is high, the resulting bainite and martensite have a high dislocation density, and, therefore, the resulting average KAM value is high. Accordingly, the average cooling rate over the range of 600 to 200°C is preferably 15°C/s or less. The average cooling rate is more preferably 14°C/s or less. The average cooling rate is even more preferably 13°C/s or less and most preferably 12°C/s or less. The lower the average cooling rate over the range of 600 to 200°C, the more preferable. However, from the standpoint of manufacturing efficiency, it is preferable that the average cooling rate be 2°C/s or greater. The average cooling rate over the range of 600 to 200°C is more preferably 3°C/s or greater. The average cooling rate is even more preferably 4°C/s or greater and most preferably 5°C/s or greater.

The average cooling rates mentioned above are all determined by dividing the temperature difference that defines the respective average cooling rates by the time required to accomplish the cooling.

The heat treatment process after electric resistance welding is a process including the heating and the cooling.

After the heat treatment process, tempering may be additionally performed to adjust the hardness. In the tempering process, it is preferable that a holding temperature be 500°C or greater and 700°C or less. When the holding temperature is less than 500°C, the effect of reducing hardness cannot be achieved, which results in a high average KAM value and a large standard deviation of the KAM value distribution. In addition, a low-temperature tempering embrittlement phenomenon may occur, and, consequently, ductility and toughness may be reduced, which may result in reduced bending resistance. Accordingly, the holding temperature is preferably 500°C or greater. The holding temperature is more preferably 550°C or greater. The holding temperature is even more preferably 560°C or greater and most preferably 570°C or greater. On the other hand, when the holding temperature is greater than 700°C, austenite transformation partially occurs, and C is concentrated there and forms a hard microstructure, which results in a large standard deviation of the KAM value distribution. Accordingly, the holding temperature for the tempering process is preferably 700°C or less. The holding temperature is more preferably 670°C or less. The holding temperature is even more preferably 660°C or less and most preferably 650°C or less.

Note that whether a steel pipe is an electric resistance welded steel pipe can be determined as follows: an electric resistance welded steel pipe is cut in a direction perpendicular to the pipe axis direction, the cut surface containing the weld (electric resistance weld) is polished and then etched, and the surface is observed with an optical microscope. When the melted and solidified portion of a weld (electric resistance weld) has a width in a pipe circumferential direction of 1.0 µm or greater and 1000 µm or less along the entire thickness of the pipe, the pipe is an electric resistance welded steel pipe. That is, the width in the pipe circumferential direction of the melted and solidified portion of a weld (electric resistance weld) is preferably 1.0 µm or greater and more preferably 2.0 µm or greater, along the entire thickness of the pipe. Furthermore, the width is preferably 1000 µm or less and more preferably 800 µm or less.

Note that an appropriate etchant may be selected in accordance with the steel components and the type of the electric resistance welded steel pipe. Furthermore, the melted and solidified portion can be visually identified as the electric resistance weld 3, which is a region having a microstructural morphology and a contrast that are different from those of a base metal material 1 and a heat-affected zone 2 of Fig. 5, as schematically illustrated in Fig. 5, which is a representation of the cross section after etching. For example, the melted and solidified portion of electric resistance welded steel pipes made of carbon steel or a low alloy steel can be identified as a white region, as observed under an optical microscope, in the cross section resulting from etching with nital. The melted and solidified portion of UOE steel pipes made of carbon steel or a low alloy steel can be identified as a region having a solidified microstructure that is cellular or dendritic, as observed under an optical microscope, in the cross section resulting from etching with nital.

### EXAMPLES

The present invention will be described in more detail below with reference to Examples. The present invention is not limited to the Examples below.

Molten steels each having the chemical composition shown in Table 1 were prepared by steel making, to form slabs (steel materials). The obtained slabs were heated, hot rolled, and cooled. Subsequently, the resulting sheets were each coiled, and thus, hot rolled steel sheets having the thickness (mm) shown in Table 2 were prepared. Subsequently, the hot rolled steel sheets were each subjected to cold roll forming to be formed into a cylindrical shape and then electric-resistance-welded under the conditions shown in Table 2; thus, electric resistance welded steel pipes having the outside diameter (mm) and the wall thickness (mm) shown in Table 2 were prepared.

A test specimen was cut from each of the prepared electric resistance welded steel pipes, and a measurement of the KAM value, a tensile test, and a flattening test were each performed as described below. The "base metal material" referred to below is a region of the base metal material located 90° from the electric resistance weld in the pipe circumferential direction.

### [Measurement of KAM Value]

The average KAM value and the standard deviation of the KAM value distribution were measured with an SEM/EBSD method. A measurement area of 400 µm × 400 µm and a measurement step size of 0.1 µm were employed, and the measured values of five fields of view were averaged. A KAM value distribution image (KAM map) was acquired from the obtained EBSD data by using OIM Analysis (trademark), which is crystal orientation analysis software. The KAM value was determined in the following manner. For each of the measurement points (regular hexagonal pixels), the regular hexagonal pixel, which was at the center, and surrounding pixels, namely, first, second, and third closest neighbors (a total of 37 pixels), were used to determine misorientations between each adjacent pair of pixels, and an average of the determined misorientations was taken as the KAM value of the central pixel. This operation was performed on all pixels in the field of view to obtain the KAM map. From the obtained distribution of KAM values, the average KAM value and the standard deviation of the KAM value distribution were determined according to equation (1) and equation (2), respectively.
[Math. 3] $\begin{matrix}Average KAM \\ value\end{matrix} = \frac{1}{n} {\sum }_{i = 1}^{n} \left(KAM value at ith measurement point\right)$ (1) n is the number of measurement points in the field of view.
[Math. 4] $\begin{matrix}Standard deviation of KAM \\ value distribution\end{matrix} = \sqrt{\frac{1}{n} {\sum }_{i = 1}^{n} {\left[\left(KAM value at ith measurement point\right)-\left(Average KAM value\right)\right]}^{2}}$ (2) n is the number of measurement points in the field of view.

### [Tensile Test]

JIS No. 5 tensile test specimens were cut from the base metal material of the electric resistance welded steel pipes such that the tensile direction was parallel to the pipe axis direction. The tensile test was performed in accordance with the specifications of JIS Z 2241 (2022). The yield strength (MPa) was a flow stress at a nominal strain of 0.5%.

### [Flattening Test]

The flattening test was performed in accordance with the specifications of JIS G 3445 (2021). As stated above, the test was performed with a method illustrated in Fig. 1. In the flattening test, a test specimen was compressed between two flat plates. In the test, the test specimen was placed such that, regarding the electric resistance weld of the test specimen, a line connecting a center of the test specimen to the electric resistance weld was perpendicular to a compression direction. The test specimen was a tubular test specimen having a length in the pipe axis direction of 100 mm. The number of test specimens that were tested was five. The portion of the weld on the pipe outer surface side was polished to a metallic luster. A compression speed of 10 mm/min was employed. At the time a crack was visually observed, the compression was stopped, and at that time, the distance h between the flat plates and the length of each of the cracks were measured. The flattening value was determined by the expression h/D, where D was the outside diameter of the steel pipe.

The results obtained are shown in Table 3.

In Table 3, the electric resistance welded steel pipes of Nos. 1, 3, 5, 8, 10, 11, 12, 13, 14, 15, 16, 17, 18, 19, 20, 21, and 22 are Invention Examples, and the electric resistance welded steel pipes of Nos. 2, 4, 6, 7, and 9 are Comparative Examples.

In all of the electric resistance welded steel pipes of the Invention Examples, the ratio of the total length of cracks to the entire length of the test specimen was not greater than 0.050, and the maximum crack length was not greater than 2.0 mm, at the time the flattening value h/D reached 0.25 in the flattening test.

In contrast, the electric resistance welded steel pipe of No. 2, which is a Comparative Example, had a large angle between abutting surfaces regarding the electric resistance welding and, consequently, did not have desired bending resistance.

The electric resistance welded steel pipe of No. 4, which is a Comparative Example, had a large cross-sectional area of an expelled portion of molten steel on the outer surface regarding the electric resistance welding and, consequently, did not have desired bending resistance.

The electric resistance welded steel pipe of No. 6, which is a Comparative Example, had a small cross-sectional area of an expelled portion of molten steel on the outer surface regarding the electric resistance welding and, consequently, did not have desired bending resistance.

The electric resistance welded steel pipe of No. 7, which is a Comparative Example, had a large amount of upset regarding the electric resistance welding and, consequently, did not have desired bending resistance.

The electric resistance welded steel pipe of No. 9, which is a Comparative Example, had a small amount of upset regarding the electric resistance welding and, consequently, did not have desired bending resistance.

**[Table 1]**

| No | Chemical Composition (mass%) | | | | | | | | | | | | | | | | |
|---|---|---|---|---|---|---|---|---|---|---|---|---|---|---|---|---|---|
| | C | Si | Mn | P | S | Al | N | Nb | V | Ti | Cu | Ni | Cr | Mo | Ca | B | Sn |
| 1 | 0.151 | 0.37 | 2.49 | 0.007 | 0.0004 | 0.028 | 0.0029 | - | - | - | - | - | - | - | - | - | - |
| 2 | 0.151 | 0.37 | 2.49 | 0.007 | 0.0004 | 0.028 | 0.0029 | - | - | - | - | - | - | - | - | - | - |
| 3 | 0.072 | 0.15 | 1.44 | 0.023 | 0.0034 | 0.039 | 0.0048 | - | - | 0.034 | - | - | 0.38 | 0.42 | - | - | - |
| 4 | 0.072 | 0.15 | 1.44 | 0.023 | 0.0034 | 0.039 | 0.0048 | - | - | 0.034 | - | - | 0.38 | 0.42 | - | - | - |
| 5 | 0.024 | 0.03 | 0.55 | 0.009 | 0.0024 | 0.044 | 0.0038 | 0.049 | 0.045 | 0.015 | 0.45 | 0.32 | - | - | 0.0023 | - | 0.084 |
| 6 | 0.024 | 0.03 | 0.55 | 0.009 | 0.0024 | 0.044 | 0.0038 | 0.049 | 0.045 | 0.015 | 0.45 | 0.32 | - | - | 0.0023 | - | 0.084 |
| 7 | 0.024 | 0.03 | 0.55 | 0.009 | 0.0024 | 0.044 | 0.0038 | 0.049 | 0.045 | 0.015 | 0.45 | 0.32 | - | - | 0.0023 | - | 0.084 |
| 8 | 0.050 | 0.29 | 1.27 | 0.046 | 0.0040 | 0.049 | 0.0021 | 0.072 | - | 0.023 | - | - | - | - | - | - | 0.027 |
| 9 | 0.050 | 0.29 | 1.27 | 0.046 | 0.0040 | 0.049 | 0.0021 | 0.072 | - | 0.023 | - | - | - | - | - | - | 0.027 |
| 10 | 0.196 | 0.34 | 1.85 | 0.020 | 0.0036 | 0.025 | 0.0038 | 0.015 | - | 0.059 | - | - | - | - | - | 0.0025 | - |
| 11 | 0.196 | 0.34 | 1.85 | 0.020 | 0.0036 | 0.025 | 0.0038 | 0.015 | - | 0.059 | - | - | - | - | - | 0.0025 | - |
| 12 | 0.163 | 0.20 | 1.43 | 0.018 | 0.0104 | 0.032 | 0.0036 | 0.019 | 0.067 | 0.012 | 0.12 | 0.13 | - | - | - | - | - |
| 13 | 0.163 | 0.20 | 1.43 | 0.018 | 0.0104 | 0.032 | 0.0036 | 0.019 | 0.067 | 0.012 | 0.12 | 0.13 | - | - | - | - | - |
| 14 | 0.163 | 0.20 | 1.43 | 0.018 | 0.0104 | 0.032 | 0.0036 | 0.019 | 0.067 | 0.012 | 0.12 | 0.13 | - | - | - | - | - |
| 15 | 0.070 | 0.19 | 1.56 | 0.011 | 0.0015 | 0.022 | 0.0030 | 0.034 | - | 0.030 | - | - | 0.25 | - | 0.0018 | - | - |
| 16 | 0.032 | 0.05 | 1.27 | 0.006 | 0.0022 | 0.016 | 0.0019 | 0.025 | 0.035 | 0.028 | 0.08 | 0.06 | 0.05 | 0.16 | 0.0020 | 0.0011 | 0.016 |
| 17 | 0.064 | 0.08 | 1.25 | 0.009 | 0.0043 | 0.041 | 0.0033 | - | - | - | 0.46 | - | - | - | - | - | - |
| 18 | 0.052 | 0.12 | 0.96 | 0.020 | 0.0019 | 0.021 | 0.0043 | - | - | - | - | 0.44 | - | - | - | - | - |
| 19 | 0.055 | 0.30 | 1.68 | 0.005 | 0.0015 | 0.045 | 0.0035 | - | - | - | - | - | 0.40 | - | - | - | - |
| 20 | 0.130 | 0.27 | 1.42 | 0.006 | 0.0006 | 0.018 | 0.0023 | - | - | - | - | - | - | 0.41 | - | - | - |
| 21 | 0.070 | 0.23 | 1.14 | 0.017 | 0.0004 | 0.028 | 0.0044 | - | - | - | - | - | - | - | - | - | 0.093 |
| 22 | 0.070 | 0.23 | 1.14 | 0.017 | 0.0004 | 0.028 | 0.0044 | - | - | - | - | - | - | - | - | - | 0.093 |

| | | | | | | | | | | | | | | | | | |
|---|---|---|---|---|---|---|---|---|---|---|---|---|---|---|---|---|---|
| · The remainder of the chemical composition, other than the above, is balance Fe and unavoidable impurities. | | | | | | | | | | | | | | | | | |

**[Table 2]**

| No | Hot Rolled Steel Sheet | Electric Resistance Welding | | | | Heat Treatment | | | | Tempering | Electric Resistance Welded Steel Pipe | |
|---|---|---|---|---|---|---|---|---|---|---|---|---|
| | Thickness (mm) | Angle Formed by Abutting Surfaces (°) | Cross Sectional Area of Expelled Portion of Molten Steel on Outer Surface (mm²) | Cross Sectional Area of Expelled Portion of Molten Steel on Outer Surface (mm²) /Thickness (mm) | Amount of Upset (mm) /Thickness (mm) ×100 (%) | Heating Temperature (°C) | Average Cooling Rate Over Range of 950 to 850°C (°C/s) | Average Cooling Rate Over Range of 800 to 650°C (°C/s) | Average Cooling Rate Over Range of 600 to 200°C (°C/s) | Holding Temperature (°C) | Outside Diameter (mm) | Wall Thickness (mm) |
| 1 | 25 | 1 | 30 | 1.2 | 93 | 960 | 6 | 39 | 14 | 510 | 600 | 25 |
| 2 | 19 | 16 | 13 | 0.7 | 30 | 1100 | 6 | 45 | 12 | 660 | 550 | 19 |
| 3 | 6 | 3 | 6 | 1.0 | 78 | 1000 | 3 | 27 | 10 | 690 | 100 | 6 |
| 4 | 12 | 6 | 26 | 2.2 | 94 | 950 | 8 | 33 | 14 | 650 | 500 | 12 |
| 5 | 15 | 5 | 27 | 1.8 | 67 | 980 | 4 | 49 | 14 | 640 | 500 | 15 |
| 6 | 15 | 14 | 6 | 0.4 | 25 | 990 | 3 | 29 | 13 | 640 | 500 | 15 |
| 7 | 15 | 8 | 29 | 1.9 | 110 | 1060 | 7 | 38 | 14 | 560 | 500 | 15 |
| 8 | 19 | 13 | 27 | 1.4 | 26 | 1020 | 3 | 48 | 6 | 520 | 400 | 19 |
| 9 | 19 | 7 | 13 | 0.7 | 17 | 960 | 5 | 37 | 9 | 640 | 400 | 19 |
| 10 | 22 | 3 | 20 | 0.9 | 26 | 970 | 5 | 59 | 14 | 530 | 700 | 22 |
| 11 | 20 | 13 | 26 | 1.3 | 54 | 1030 | 15 | 49 | 12 | 570 | 650 | 20 |
| 12 | 20 | 7 | 22 | 1.1 | 52 | 1000 | 7 | 33 | 14 | 620 | 550 | 20 |
| 13 | 19 | 3 | 36 | 1.9 | 54 | 1030 | 8 | 10 | 9 | 590 | 550 | 19 |
| 14 | 20 | 3 | 16 | 0.8 | 44 | 980 | 4 | 27 | 18 | 500 | 500 | 20 |
| 15 | 28 | 5 | 28 | 1.0 | 55 | 1010 | 6 | 40 | 11 | 590 | 600 | 28 |
| 16 | 25 | 2 | 15 | 0.6 | 30 | 1000 | 7 | 44 | 5 | 500 | 550 | 25 |
| 17 | 25 | 6 | 38 | 1.5 | 33 | 1050 | 9 | 15 | 8 | 460 | 550 | 25 |
| 18 | 16 | 4 | 13 | 0.8 | 59 | 1030 | 7 | 16 | 5 | 520 | 650 | 16 |
| 19 | 17 | 5 | 20 | 1.2 | 31 | 970 | 8 | 39 | 14 | 630 | 600 | 17 |
| 20 | 25 | 9 | 33 | 1.3 | 33 | 1000 | 4 | 41 | 10 | 550 | 550 | 25 |
| 21 | 20 | 2 | 14 | 0.7 | 53 | 990 | 5 | 44 | 9 | 580 | 400 | 20 |
| 22 | 20 | 4 | 18 | 0.9 | 60 | 890 | 4 | 38 | 10 | 580 | 400 | 20 |

| | | | | | | | | | | | | |
|---|---|---|---|---|---|---|---|---|---|---|---|---|
| · The underlined value is a value outside the range of the present invention. | | | | | | | | | | | | |

**[Table 3]**

| No | Steel Microstructure at Wall-Thickness-Wise Middle of Electric Resistance Weld | | Mechanical Properties of Electric Resistance Welded Steel Pipe | | | Notes |
|---|---|---|---|---|---|---|
| | Average KAM Value (°) | Standard Deviation of KAM Value Distribution (°) | Yield Strength (MPa) | Ratio of Total Length of Cracks to Entire Length of Test Specimen in Flattening Test | Maximum Crack Length in Flattening Test (mm) | |
| 1 | 2.2 | 0.7 | 525 | 0.011 | 0.6 | Invention Example |
| 2 | 2.1 | 0.8 | 457 | 0.120 | 5.0 | Comparative Example |
| 3 | 2.4 | 1.2 | 579 | 0.000 | 0 | Invention Example |
| 4 | 2.9 | 0.6 | 488 | 0.108 | 3.3 | Comparative Example |
| 5 | 3.8 | 1.4 | 617 | 0.022 | 0.4 | Invention Example |
| 6 | 4.1 | 1.2 | 553 | 0.053 | 1.8 | Comparative Example |
| 7 | 4.3 | 1.7 | 590 | 0.086 | 4.1 | Comparative Example |
| 8 | 2.5 | 1.1 | 502 | 0.000 | 0 | Invention Example |
| 9 | 3.5 | 0.7 | 611 | 0.091 | 3.5 | Comparative Example |
| 10 | 2.1 | 0.9 | 447 | 0.005 | 0.3 | Invention Example |
| 11 | 1.9 | 1.6 | 421 | 0.030 | 1.8 | Invention Example |
| 12 | 3.2 | 0.9 | 541 | 0.012 | 0.5 | Invention Example |
| 13 | 1.8 | 1.6 | 409 | 0.044 | 1.8 | Invention Example |
| 14 | 4.2 | 0.8 | 613 | 0.046 | 1.9 | Invention Example |
| 15 | 3.1 | 0.7 | 519 | 0.046 | 1.8 | Invention Example |
| 16 | 2.5 | 1.1 | 452 | 0.000 | 0 | Invention Example |
| 17 | 3.7 | 1.4 | 567 | 0.045 | 1.7 | Invention Example |
| 18 | 3.5 | 0.8 | 475 | 0.016 | 0.7 | Invention Example |
| 19 | 2.2 | 1.1 | 534 | 0.018 | 0.6 | Invention Example |
| 20 | 2.7 | 1.0 | 502 | 0.039 | 1.1 | Invention Example |
| 21 | 3.0 | 1.3 | 555 | 0.020 | 0.9 | Invention Example |
| 22 | 2.8 | 1.8 | 540 | 0.048 | 1.9 | Invention Example |

| | | | | | | |
|---|---|---|---|---|---|---|
| · The underlined value is a value outside the range of the present invention. | | | | | | |

### Reference Signs List

- 1: base metal material
- 2: heat-affected zone
- 3: electric resistance weld
- 4: bead
- 5A: abutting point
- 5: abutting portion
- 8: flattening test specimen (test specimen)
- 10: center of flattening test specimen (test specimen)
- 11: flat plate
- 12: compression direction
- 20: open pipe
- 21: fin pass roll
- 22: squeeze roll
- 23: top roll
- 24: contact tip
- 25: high-frequency oscillator
- 26: laser profiler
- 27: welding direction (pipe production direction)
- 30: angle between abutting surfaces
- 31: gap between fin pass rolls

## Claims

1. An electric resistance welded steel pipe comprising a base metal material and an electric resistance weld, wherein
in a flattening test in which a flattening test specimen cut from the electric resistance welded steel pipe is compressed between two flat plates, a ratio of a total length of cracks having a length in a pipe axis direction of 0.50 mm or greater as observed on an outer surface of the flattening test specimen to an entire length of the flattening test specimen in the pipe axis direction is 0.050 or less, and a maximum crack length of the cracks in the pipe axis direction is 2.0 mm or less, at a time a flattening value h/D reaches 0.25, where
h is a distance (mm) between the flat plates in the flattening test,
D is an outside diameter (mm) of the electric resistance welded steel pipe, and
the flattening value h/D is 1 at a start of the flattening test.

2. The electric resistance welded steel pipe according to claim 1, wherein the base metal material has a chemical composition comprising, in mass%:
C: 0.020% or greater and 0.200% or less,
Si: 0.40% or less,
Mn: 0.50% or greater and 2.50% or less,
P: 0.050% or less,
S: 0.0200% or less,
Al: 0.005% or greater and 0.100% or less, and
N: 0.0100% or less;
the chemical composition optionally further comprising, in mass%, one or more selected from
Nb: 0.080% or less,
V: 0.080% or less,
Ti: 0.080% or less,
Cu: 0.50% or less,
Ni: 0.50% or less,
Cr: 0.50% or less,
Mo: 0.50% or less,
Ca: 0.0050% or less,
B: 0.0050% or less, and
Sn: 0.100% or less,
with the balance of the chemical composition being Fe and unavoidable impurities.

3. The electric resistance welded steel pipe according to claim 1 or 2, wherein a steel microstructure at a wall-thickness-wise middle of the electric resistance weld has an average KAM value of 2.0° or greater and 4.0° or less and a standard deviation of a KAM value distribution of 1.5° or less, where KAM stands for Kernel Average Misorientation, and the average KAM value is an average of KAM values.

4. A line pipe comprising the electric resistance welded steel pipe described in any one of claims 1 to 3.

5. A method for manufacturing the electric resistance welded steel pipe described in any one of claims 1 to 3, the method comprising an electric resistance welding process that uses a hot rolled steel sheet serving as a material of the electric resistance welded steel pipe and in which a widthwise end and another widthwise end of the hot rolled steel sheet are abutted against each other and electric-resistance-welded, wherein
an angle formed by opposing abutting surfaces is 0° or greater and 15° or less,
a cross-sectional area (mm²) of a portion of expelled molten steel present on an outer surface of the electric resistance welded steel pipe is greater than or equal to 0.5 times and less than or equal to 2.0 times a thickness (mm) of the hot rolled steel sheet, and
an amount (mm) of upset is 20% or greater and 100% or less of the thickness (mm).

6. The method for manufacturing the electric resistance welded steel pipe according to claim 5, further comprising a heat treatment process that is performed after the electric resistance welding process, the heat treatment process being a process in which
heating is performed at a heating temperature of 900°C or greater and 1150°C or less, the heating temperature being a temperature at a wall-thickness-wise middle of the electric resistance weld, and
cooling is performed under conditions in which an average cooling rate is 2°C/s or greater and 10°C/s or less over a range of 950 to 850°C, the average cooling rate is 12°C/s or greater over a range of 800 to 650°C, and the average cooling rate is 15°C/s or less over a range of 600 to 200°C, the average cooling rate being an average cooling rate at the wall-thickness-wise middle of the electric resistance weld.

7. The method for manufacturing the electric resistance welded steel pipe according to claim 6, further comprising a tempering process that is performed after the heat treatment process and uses a holding temperature of 500°C or greater and 700°C or less, the holding temperature being a temperature at the wall-thickness-wise middle of the electric resistance weld.
